# FASCICULE DE BREVET EUROPEEN

(11) **EP 2 167 772 B1**
(45) Date de publication et mention de la délivrance du brevet: **21.08.2013**
(21) Numéro de dépôt: 08775022.0
(22) Date de dépôt: 11.07.2008
(51) Int. Cl.: B32B 17/10, E06B 5/16, E06B 3/663

(54) **VITRAGE ANTI-FEU**
BRANDSCHUTZVERGLASUNGSANORDNUNG
FIRE-RESISTANT GLAZING ASSEMBLY

(30) Priorité: 11.07.2007 EP 07112256
(43) Date de publication de la demande: 31.03.2010
(73) Titulaire: AGC Glass Europe, 1170 Bruxelles (Watermael-Boitsfort) (BE)
(72) Inventeur: GOELFF, Pierre, B-6040 Jumet (BE)
(74) Mandataire: Le Vaguerèse, Sylvain Jacques
(86) Numéro de dépôt international: PCT/EP2008/059105
(87) Numéro de publication internationale: WO 2009/007452

(56) Documents cités:
- EP-A- 0 753 639
- EP-A- 0 970 930
- EP-A- 1 205 524
- WO-A-01/07744
- US-A- 5 653 839

## Description

La présente invention concerne les vitrages anti-feu comprenant au moins une couche d'un silicate alcalin hydraté dont l'exposition au feu engendre la formation d'une mousse opaque qui s'oppose à la transmission des radiations et maintient les feuilles de verre auxquelles la ou les couches de silicate alcalin sont associées.

Plus particulièrement l'invention concerne les vitrages anti-feu dans lesquels la couche de silicate alcalin hydraté se forme par durcissement de la composition dont les constituants ont été préalablement rassemblés. Dans ces vitrages la composition au moment de sa préparation est sous forme d'un liquide plus ou moins visqueux. Elle est versée entre deux feuilles de verre réunies à leur périphérie par un ensemble de moyens qui maintiennent les feuilles à distance l'une de l'autre, et qui, avec les deux feuilles de verre, délimitent un volume étanche permettant de contenir cette composition.

De façon alternative la solution est versée sur une feuille de verre disposée horizontalement. Comme précédemment la feuille de verre porte à sa périphérie les moyens qui maintiennent la composition. Dans ce deuxième mode de préparation, une deuxième feuille de verre est ensuite appliquée à un stade plus ou moins avancé du durcissement de la couche de silicate alcalin hydraté. Comme précédemment lors de l'assemblage les feuilles doivent être maintenues à distance l'une de l'autre.

Traditionnellement la distance entre les feuilles est obtenue en disposant des éléments "espaceur" qui simultanément contribuent au collage des feuilles. Usuellement on utilise des cordons profilés en caoutchouc de butyle. Pour conférer à ces profilés une rigidité suffisante, les caoutchoucs de butyle sont renforcés par de charges diverses, notamment du noir de carbone, des poudres minérales ou des poudres de verre.

L'utilisation de cordons profilés de butyle présente divers avantages et en particulier de s'adapter à toutes les configurations possibles et de contribuer à l'étanchéité de ce structures. Un cordon de ce type est décrit dans EP 1 205 524 A.

En dépit de ses qualités, le caoutchouc de butyle présente quelques inconvénients. Il est relativement coûteux et présente parfois une certaine sensibilité au contact des compositions de silicates alcalins, lesquelles présentent un caractère basique très prononcé. Dans la composition alcaline on constate parfois localement une dispersion de poudre de carbone altérant la transparence du vitrage. Surtout le caoutchouc butyle est décomposé lorsqu'il est soumis à l'épreuve du feu. Il dégage des fumées et si sa décomposition apparait à température relativement peu élevée le silicate alcalin peut éventuellement s'échapper du vitrage avant de former la mousse protectrice.

EP 970 930 A décrit la formation d'un vitrage cintré et préconise l'utilisation d'un cordon souple de caoutchouc de silicone.

WO 01/07744A propose de constituer un vitrage anti-feu comprenant un cadre rigide faisant simultanément office d'espaceur entre les feuilles de verre.

Pour limiter les inconvénients inhérents à l'utilisation d'espaceurs notamment en caoutchouc butyle l'invention propose l'utilisation d'un ensemble tel que défini à la revendication 1.

Le profilé est avantageusement constitué sous forme d'un barreau creux, ce qui pour les produits synthétiques limite la quantité des dégagements indésirables lors de l'épreuve au feu.

Le matériau constituant le profilé est de préférence suffisamment rigide pour maintenir de manière satisfaisante la distance entre les feuilles même sous les contraintes qui sont celles de l'assemblage de ces vitrages, en particulier de la pression qu'ils supportent dans les cadres dans lesquels ils sont disposés.

Pour permettre un contact aussi efficace que possible avec les feuilles de verre, le profilé présente avantageusement des faces planes parallèles en regard des feuilles de verre. Dans ce cas, l'adhésif revêt au moins ces faces du profilé.

Le cas échéant l'adhésif revêt complètement le profilé ce qui évite le risque d'une application irrégulière sur les faces destinées au collage avec les feuilles de verre.

Quel que soit l'application de l'adhésif, le volume de matériau adhésif reste dans tous les cas très réduit par rapport à celui correspondant au caoutchouc butyle des produits traditionnels. Cette quantité réduite et le fait que la rigidité soit assurée essentiellement par le profilé, permettent le cas échéant de diversifier la nature des adhésifs utilisés.

S'il est possible, comme précédemment, de choisir un caoutchouc butyle, celui-ci est en quantité beaucoup moindre d'une part et n'est pas nécessairement "rigidifié" par des charges susceptibles de conduire à des difficultés d'utilisation comme celles indiquées ci-dessus pour ce qui concerne la présence d'une forte proportion de carbone. Eventuellement le butyle peut être exempt de carbone ou simplement n'en renfermer qu'une quantité bien moindre dans le but par exemple de conserver une bonne protection contre une dégradation du butyle sous l'effet d'une exposition aux UV.

Bien évidemment le caoutchouc butyle peut encore renferme des charges minérales inertes à seule fin de réduire encore la quantité de butyle présente dans ce revêtement adhésif. Il peut aussi renfermer des charges à caractère endothermique afin d'améliorer son comportement et sa résistance au feu.

D'autres adhésifs peuvent aussi être mis en oeuvre pour autant qu'ils présentent des caractéristiques analogues ou meilleures que celles des caoutchoucs de butyle. Parmi les adhésifs possibles figurent notamment les résines acryliques, les colles de silicones. Eventuellement, compte tenu de la faible quantité mise en oeuvre, il est possible d'utiliser des polyuréthanes ordinairement exclus en raison des risques possibles de dégagements toxiques à l'épreuve au feu.

Traditionnellement les vitrages anti-feu considérés comportent à leur périphérie, en plus de l'espaceur, un revêtement qui améliore encore l'étanchéité de l'ensemble en particulier vis-à-vis de l'atmosphère environnante et protège la composition de silicate contre une altération dans le temps.

Traditionnellement pour assurer l'étanchéité à la périphérie du vitrage, on utilise une résine de polysulfure, ou de silicone, éventuellement aussi une résine de polyuréthane mais toujours en très faible quantité pour limiter l'éventuel dégagement de fumées toxiques à l'épreuve au feu. Tous ces composés sont également utilisables selon l'invention.

L'invention est décrite de manière détaillée dans la suite en faisant référence à la planche de dessins dans laquelle :
- la figure 1 représente de façon schématique un vitrage anti-feu de type traditionnel ;
- la figure 2 de façon analogue un mode de réalisation d'un vitrage selon l'invention ;
- la figure 3 est un autre mode de réalisation d'un vitrage selon l'invention ;
- la figure 4 est un autre mode de réalisation d'un vitrage selon l'invention ;
- la figure 5 est un autre mode de réalisation d'un vitrage selon l'invention
- la figure 6 représente un vitrage comportant un ensemble selon l'invention ;
- la figure 7 représente un autre vitrage qui dans sa structure renferme un ensemble selon l'invention ;
- les figures 8a et 8b représentent de façon schématique respectivement : le profil traditionnel de la section d'un espaceur constitué à partir d'un cordon de caoutchouc de butyle, et celui d'un espaceur selon l'invention destiné à prévenir l'inclusion de bulles dans la couche intumescente.

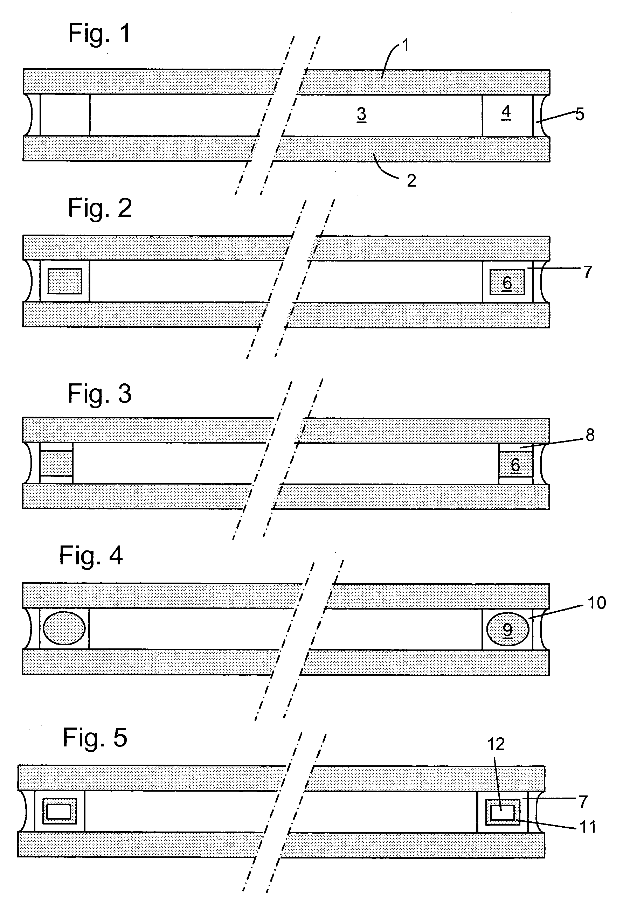

Traditionnellement comme présenté à la figure 1 le vitrage anti-feu est constitué de deux feuilles de verre (1, 2) maintenues à distance l'une de l'autre par un espaceur (4) disposé à la périphérie des feuilles. L'espaceur (4) délimite avec les feuilles de verre (1,2) un volume (3) qui est rempli d'une composition de silicate alcalin hydraté.

L'espaceur (4) colle aux feuilles de verre (1, 2) et les maintient en position l'une par rapport à l'autre. Cet assemblage est nécessaire notamment au stade de constitution du vitrage, avant que le silicate alcalin ne se solidifie et adhère lui-même aux feuilles de verre. La cohésion du feuilleté est encore accrue lors de l'étuvage qui traditionnellement termine le processus de préparation.

Le matériau de l'espaceur est usuellement un caoutchouc de butyle chargé de composants inertes qui lui confèrent la résistance à l'écrasement nécessaire. La présence de carbone comme charge ajoute à ce rôle celui de protection du polymère contre les dégradations causées par l'exposition aux UV.

Les matériaux des espaceurs sont nécessairement étanches aux compositions de silicates alcalins qui sont appliquées sous forme fluide avant que ces silicates ne prennent en masse. Ultérieurement il faut s'efforcer de protéger le matériau intumescent contre les influences extérieures qui peuvent altérer les propriétés, notamment optiques. La sensibilité du silicate vient notamment de l'éventuel transfert d'eau avec l'atmosphère extérieure. Les caoutchoucs butyle ne sont pas suffisamment étanches à l'humidité pour prévenir ces transferts.

Une modification locale de la teneur en eau du silicate alcalin peut entraîner l'apparition d'un voile à la périphérie du vitrage. Pour cette raison il est usuel de recouvrir le bord du vitrage par un matériau qui s'oppose au passage de notamment de la vapeur d'eau. Traditionnellement on utilise par exemple un polysulfure, matériau qui adhère bien au verre, et qui est compatible avec l'espaceur butyle.

A la figure 1, le matériau favorisant l'étanchéité est présenté sous la référence (5). Le matériau d'étanchéité, le plus souvent un polysulfure, est ordinairement inapte à servir immédiatement d'espaceur en raison de son manque de rigidité lors de son application. Les polysulfures sont appliqués sous forme partiellement réticulés ce qui leur confère la plasticité nécessaire à leur application. Leur durcissement s'opère lentement et peut se poursuivre pendant plusieurs jours avant son achèvement qui se traduit par une rigidité certaine. Mais pendant ce temps l'espaceur assure seul le maintien de la distance entre les feuilles.

La figure 2 présente le même type de vitrage dans lequel l'espaceur (4) est remplacé, selon l'enseignement de l'invention, par un ensemble comprenant un profilé (6) et un composant d'adhésion (7). Le profilé (6) confère la rigidité nécessaire à cet espaceur tandis que l'adhésif (7) lie le profilé à chacune des feuilles de verre (1, 2). La dissociation des rôles joués antérieurement par le seul espaceur (4), permet de choisir au mieux les matériaux et les propriétés de ceux-ci pour répondre aux diverses exigences exposées précédemment. Le même profilé peut être totalement inerte lorsqu'exposé au feu ; la qualité de l'adhésion par le matériau (7) est normalement assurée pour des films extrêmement peu épais, et en conséquence les inconvénients liés à la présence de matériaux sensibles aux hautes températures deviennent négligeables.

A la figure 2, les dimensions relatives des différents éléments constitutifs ne sont pas respectées pour des raisons de clarté. En particulier l'épaisseur du matériau adhésif (7) est volontairement exagérée.

Le profilé (6) est choisi de préférence de telle sorte qu'il présente une bonne étanchéité à la vapeur d'eau. Dans ces conditions la surface d'échange possible entre le silicate (3) et l'extérieur se limite à l'épaisseur de la couche d'adhésif située entre les feuilles de verre (1, 2) et le profilé (6). Autrement dit les échanges peuvent être pratiquement réduits à rien. Néanmoins pour garantir une parfaite étanchéité, et par suite l'absence d'altération des bords du silicate (3), il est possible comme représenté à la figure 2, de conserver un joint supplémentaire (7) faisant obstacle à la modification locale de la teneur en eau. Compte tenu de son rôle limité, le joint (7) peut être aussi d'une épaisseur très réduite par rapport à celle traditionnellement mise en oeuvre.

Toujours dans le but de limiter les quantités de matériau adhésif utilisé dans le cadre de l'invention, ce matériau peut être appliqué uniquement sur les surfaces à réunir. La figure 2 présente un profilé (6) de section rectangulaire, revêtu sur toutes ses faces. L'enduction complète est éventuellement commode a réaliser sur le profilé (6). L'application sans lacune peut en être simplifiée. Néanmoins il est possible de procéder à l'application uniquement sur les surfaces participant à l'assemblage. Ce mode est représenté à la figure 3. Seules deux les deux faces tournées vers les feuilles de verre (1, 2) sont revêtues de l'adhésif (8). Cette forme suppose que le matériau constituant le profilé (6) soit bien entendu inerte à la fois au silicate (3) et au produit d'étanchéité (5). Dans le cas contraire il est préférable de conserver un revêtement de toutes les faces du profilé (6).

Par commodité l'espaceur présente des faces planes en regard des feuilles de verre et sa section est avantageusement rectangulaire. Comme indiqué précédemment cette configuration permet notamment de réduire le plus possible les quantités de matériau adhésif utilisées. La forme du profilé peut néanmoins être différente. La rigidité de ce profilé n'est pas nécessairement liée à une forme particulière. A titre indicatif, la figure 4 présente le profilé sous forme d'un jonc ovale (9). Une forme de ce type peut être commandée par la nature du profilé considéré. Quoiqu'il en soit, même si un tel profilé ne permet pas de réduire au mieux la quantité de matériau adhésif (10), cette quantité reste très inférieure à celle utilisée dans le mode traditionnel représenté à la figure 1.

Dans les exemples précédents de mise en oeuvre de l'invention, le profilé est représenté sous forme d'un barreau (6) ou d'une tige ou jonc (9). Pour conférer la rigidité nécessaire il peut suffire d'utiliser un tube dont l'épaisseur des parois est déterminée en fonction de la nature du profilé et de l'effort que celui-ci doit supporter. Un profilé creux (11) de ce type est présenté à la figure 5. Sa mise en oeuvre est analogue à celle des profilés présentés plus haut.

Le profilé creux ou plein peut contenir des charges inertes et/ou à caractère endothermique lors de l'exposition au feu.

Les dimensions des profilés sont fonction de l'épaisseur de la couche de silicate mise en oeuvre. L'utilisation des compositions liquides qui durcissent sans séchage permettent de constituer des couches relativement épaisses. Des profilés en matériaux polymères peuvent être suffisamment rigides pour être également utilisés dans une configuration "creuse".

Le cas échéant, lorsqu'un profilé creux (11) est utilisé, l'espace intérieur (12) n'est pas nécessairement clos. Il peut être en partie communiquant par les faces non exposées au silicate. Une telle disposition peut être utilisée pour conférer des propriétés spécifiques additionnelles au profilé.

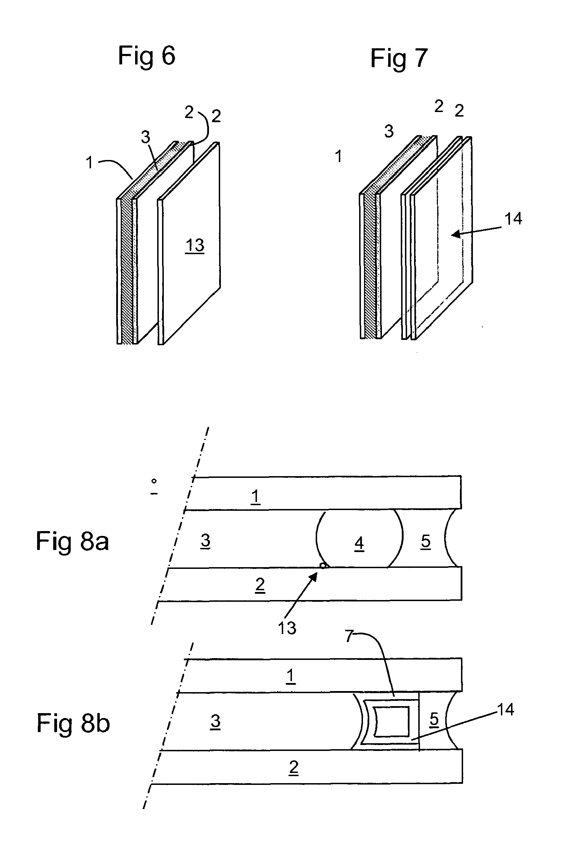

Lorsque comme antérieurement l'espaceur est constitué d'un cordon de caoutchouc de butyle, sa mise en oeuvre conduit habituellement à une compression du matériau constitutif et par suite à une section de l'espaceur (4) qui présente des faces convexes notamment sur la face au contact du silicate alcalin hydraté (3). C'est ce que présente la figure 8a. Dans cette configuration le contact du butyle avec les feuilles de verres (1, 2) se fait sous un angle inférieur à 90°. Lors de l'introduction de la composition de silicate, l'air n'est pas toujours parfaitement évacué et d'autant moins que l'angle formé est plus aigu. Par suite des bulles, telles que schématiquement présenté en (13) peuvent se trouver emprisonnées dans le silicate et apparaître de façon inopportune dans le matériau intumescent figé.

Pour prévenir ce risque, selon un mode particulier de réalisation de l'invention, il est avantageux de faire en sorte que l'angle de contact de l'espaceur(14) avec les feuilles de verre (1, 2) soit supérieur à 90° comme présenté à la figure 8b. A cette figure le profilé 14 est présenté avec une face concave tournée vers le silicate alcalin (3), mais toute disposition qui permet d'obtenir un angle suffisant peut être utilisée.

Les compositions de silicates alcalins qui nécessitent la mise en oeuvre des espaceurs sont celles, comme indiqué, qui prennent en masse de façon spontanée à partir du mélange des constituants de ces compositions. Ce type de silicate en dehors du fait qu'il ne nécessite pas de séchage, présente des particularités, et notamment le fait qu'il renferme une teneur en eau relativement élevée. Elle n'est pas généralement inférieure à 35% en poids. A ces teneurs ou à des teneurs un peu plus élevées, l'obtention d'un caractère suffisamment réfractaire, autrement dit pour un rapport SiO₂/M₂O (M étant un alcalin, notamment le potassium) élevé, supérieur à 3,5 ou même supérieur à 4, passe par la préparation de silicate à partir de silice colloïdale et d'hydroxyde alcalin ou à partir de slice colloïdale et de silicate alcalin très concentré de rapport molaire compris entre 1,4 et 2,0. Des techniques de préparation de ces compositions de silicates font l'objet de descriptions détaillées dans les demandes de brevets européens portant les numéros 06.111.412.0 (déposée le 20.03.2006), et 07.108.971.8 (déposée le 27.02.2007).

Les vitrages selon l'invention présentés précédemment ne comportent que deux feuilles de verre et une couche de matériau intumescent. Des structures plus complexes sont également réalisées comportant cette structure de base. En particulier il est possible comme présenté à la figure 6 dans un même vitrage en plus de la structure feuilletée comprenant deux feuilles de verre (1, 2) et un couche intumescente (3) les feuilles étant maintenues de la façon revendiquée, de compléter le vitrage par une ou plusieurs feuilles de verre, par exemple une feuille simple(13) qui est distante de la structure feuilletée, pour former un vitrage qui en outre présente des propriétés d'isolation thermique.

Dans une structure analogue représentée à la figure 7, la feuille de verre simple (13) est remplacée par un ensemble feuilleté (14) comprenant par exemple deux feuilles de verre maintenue par une feuille intercalaire du type utilisé pour conférer une bonne résistance mécanique.

Ces exemples ne sont donnés qu'à titre d'illustration de mode d'utilisation des vitrages selon l'invention mais bien d'autres structures peuvent être réalisées qui toutes comportent les éléments caractéristiques de l'invention. En particulier il est possible de produire des vitrages isolants comprenant une ou plusieurs couches de matériau intumescent à base de silicate alcalin hydraté, ou associant une ou plusieurs couches de matériau intumescent à des feuilles de verre trempé ou feuilleté avec un intercalaire de type polyvinylbutural (PVB). Ces vitrages à structure plus complexe, peuvent présenter un ou plusieurs espaceurs du type décrit précédemment selon l'invention.

## Revendications

1. Vitrage anti-feu transparent constitué par assemblage d'au moins deux feuilles de verre (1,2) et entre celles-ci un matériau intumescent (3) à base de silicate alcalin hydraté, l'espace entre les feuilles de verre étant fermé au moyen d'un espaceur (4,6,9,11,14) maintenant les feuilles de verre (1,2) à distance l'une de l'autre et adhérant de manière étanche à celles-ci, l'espaceur (4,6,9,11,14) étant résistant au silicate alcalin, et forme un profilé (4,6,9,11,14) dont au moins les parties faisant face aux feuilles de verre (1,2) sont revêtues d'un adhésif (7,8,10) résistant également au silicate alcalin, **caractérisé en ce que** l'espaceur (4,6,9,11,14) est constitue d'un matériau semi rigide dont la compressibilité sous une charge équivalant à 1kg/cm² n'est pas supérieure à 5%.

2. Vitrage selon la revendication 1 dans lequel l'espaceur (6) présente une section sensiblement rectangulaire

3. Vitrage selon la revendication 1 ou la revendication 2 dans lequel l'espaceur (9,11,14) est entièrement revêtu d'adhésif (7,8,10).

4. Vitrage selon l'une des revendications précédentes dans lequel l'espaceur est un profilé creux (11).

5. Vitrage selon l'une des revendications précédentes dans lequel l'adhésif (7,8,10) est un composé à base de caoutchouc butyle, de silicone ou de résine acrylique.

6. Vitrage selon la revendication 5 dans lequel l'adhésif (7,8,10) est à base de caoutchouc butyle lequel ne comporte pas plus de 10% en poids de carbone.

7. Vitrage selon l'une des revendications précédentes dans lequel la section droite de l'espaceur (14) est telle que la face tournée vers le silicate alcalin fait un angle avec la surface du verre qui n'est pas inférieur à 90°.

8. Vitrage selon l'une des revendications précédentes dans lequel un revêtement étanche à la vapeur d'eau (5) est appliqué sur la face de l'espaceur tournée vers l'extérieur.

9. Vitrage selon la revendication 8 dans lequel le revêtement (5) est à base de polysulfure.

## Patentansprüche

1. Transparente Brandschutzverglasung, die durch Zusammensetzen mindestens zweier Glasscheiben (1, 2) und ein intumeszentes Material (3) auf Basis von hydratisiertem Alkalisilikat zwischen ihnen gebildet ist, wobei der Raum zwischen den Glasscheiben mittels eines Abstandhalters (4, 6, 9, 11, 14) geschlossen ist, der die Glasscheiben (1, 2) in einem Abstand voneinander hält und der dicht an ihnen haftet, wobei der Abstandhalter (4, 6, 9, 11, 14) beständig gegen das Alkalisilikat ist und ein Profil (4, 6, 9, 11, 14) bildet, bei dem mindestens die zu den Glasscheiben (1, 2) gerichteten Teile mit einem Klebstoff (7, 8, 10) überzogen sind, der ebenfalls beständig gegen das Alkalisilikat ist, **dadurch gekennzeichnet, dass** der Abstandhalter (4, 6, 9, 11, 14) aus einem halbstarren Material besteht, dessen Kompressibilität unter einer Belastung von 1kg/cm² nicht mehr als 5 % beträgt.

2. Verglasung nach Anspruch 1, wobei der Abstandhalter (6) einen im Wesentlichen rechtwinkligen Querschnitt aufweist.

3. Verglasung nach Anspruch 1 oder Anspruch 2, wobei der Abstandhalter (9, 11, 14) vollständig mit Klebstoff (7, 8, 10) überzogen ist.

4. Verglasung nach einem der vorhergehenden Ansprüche, wobei der Abstandhalter ein Hohlprofil (11) ist.

5. Verglasung nach einem der vorhergehenden Ansprüche, wobei der Klebstoff (7, 8, 10) eine Verbindung auf Basis von Butylkautschuk, Silikon oder Acrylharz ist.

6. Verglasung nach Anspruch 5, wobei der Klebstoff (7, 8, 10) auf Basis von Butylkautschuk gebildet ist, der nicht mehr als 10 Gew.-% Kohlenstoff umfasst.

7. Verglasung nach einem der vorhergehenden Ansprüche, wobei der Querschnitt des Abstandhalters (14) derart ist, dass die Seite, die zu dem Alkalisilikat gerichtet ist, mit der Glasoberfläche einen Winkel bildet, der nicht kleiner als 90° ist.

8. Verglasung nach einem der vorhergehenden Ansprüche, wobei eine für Wasserdampf undurchlässige Beschichtung (5) auf die Seite des Abstandhalters aufgebracht wird, die nach außen gerichtet ist.

9. Verglasung nach Anspruch 8, wobei die Beschichtung (5) auf Polysulfidbasis gebildet ist.

## Claims

1. Transparent fireproof glazing formed by an assembly of at least two glass sheets (1,2) and a hydrated alkali metal silicate-based intumescent material (3) between these glass sheets, wherein the space between the glass sheets is closed by means of a spacer (4, 6, 9, 11, 14) that holds the glass sheets (1, 2) at a distance from one another and adheres to these forming a seal, wherein the spacer (4, 6, 9, 11, 14) is resistant to the alkali metal silicate and forms a section (4, 6, 9, 11, 14), of which at least the parts facing the glass sheets (1, 2) are covered with an adhesive (7, 8, 10) that is also resistant to the alkali metal silicate, **characterised in that** the spacer (4, 6, 9, 11, 14) is formed from a semi-rigid material, the compressibility of which under a load equivalent to 1 kg/cm² is not greater than 5%.

2. Glazing according to claim 1, in which the spacer (6) has a substantially rectangular profile.

3. Glazing according to claim 1 or claim 2, in which the spacer (9, 11, 14) is completely covered with adhesive (7, 8, 10).

4. Glazing according to one of the preceding claims, in which the spacer is a hollow section (11).

5. Glazing according to one of the preceding claims, in which the adhesive (7, 8, 10) is a compound based on butyl rubber, silicone or acrylic resin.

6. Glazing according to claim 5, in which the adhesive (7, 8, 10) is based on butyl rubber that does not contain more than 10% by weight of carbon.

7. Glazing according to one of the preceding claims, in which the cross-section of the spacer (14) is such that the face directed towards the alkali silicate forms an angle with the surface of the glass that is not less than 90°.

8. Glazing according to one of the preceding claims, in which a covering sealed against water vapour (5) is applied to the face of the spacer directed towards the outside.

9. Glazing according to claim 8, in which the covering (5) is polysulphide-based.
